# EUROPÄISCHE PATENTSCHRIFT

(11) **EP 1 046 521 B1**
(45) Veröffentlichungstag und Bekanntmachung des Hinweises auf die Patenterteilung: **02.07.2008**
(21) Anmeldenummer: 00107357.6
(22) Anmeldetag: 05.04.2000
(51) Int. Cl.: B60G 17/052, B60G 17/015

(54) **Niveauregeleinrichtung für Fahrzeuge mit Luftfedern**
Height control device for vehicles with air springs
Dispositif de réglage du niveau pour véhicules à ressorts pneumatiques

(30) Priorität: 22.04.1999 DE 19918157
(43) Veröffentlichungstag der Anmeldung: 25.10.2000
(73) Patentinhaber: Continental Aktiengesellschaft, 30165 Hannover (DE)
(72) Erfinder: Westerkamp, Helge, 30171 Hannover (DE); Behmenburg, Christof, Dr., 31867 Lauenau (DE); Job, Heinz, 31535 Neustadt (DE); Folchert, Uwe, Dr., 31867 Lauenau (DE)

(56) Entgegenhaltungen:
- DE-A- 3 542 974
- DE-A- 3 542 975

## Beschreibung

Die Erfindung betrifft eine Niveauregeleinrichtung für Fahrzeuge mit Luftfedern gemäß dem Oberbegriff des Anspruchs 1. Eine solche Niveauregeleinrichtung ist aus der gattungsbildenden DE 35 42 974 A bekannt.

Moderne Niveauregeleinrichtungen weisen eine Überdruckfunktion und eine Restdruckhaltefunktion auf. Unter einer Überdruckfunktion versteht man, daß die Druckluftquelle während des Auffüllens einer der Luftfedern der Niveauregeleinrichtung mit der Atmosphäre verbunden wird, wenn sie einen vorgegebenen Förderdruck überschreitet. Dadurch ist sichergestellt, daß in den Luftfedern kein Überdruck aufgebaut werden kann, der diese beschädigen könnte. Unter einer Restdruckhaltefuntktion versteht man, daß jede Luftfeder der Niveauregeleinrichtung nur bis zu einem bestimmten vorgegebenen Restdruck entleert werden kann. Dadurch ist sichergestellt, daß der Luftdruck in den Luftfedern nicht unter diesen vorgegebenen Restdruck abfällt, so daß immer eine bestimmte Tragfähigkeit der Luftfedern erhalten bleibt.

Von Wabco, Westinghouse Fahrzeugbremsen GmbH, wird ein Kompressor mit der Nummer 415 403-1020 bzw. - 1040 vertrieben, der ein pneumatisch steuerbares erstes Wegeventil gemäß dem Oberbegriff des Anspruchs 1 aufweist, in dem die Überdruckfunktion und die Restdruckhaltefunktion integriert ist. Die Überdruckfunktion wird dadurch gewährleistet, daß beim Auffüllen einer Luftfeder mit Hilfe des Kompressors der zweite Kolben durch die Druckluft des Kompressors beaufschlagt wird und entgegen der Rückstellkraft der zweiten Feder zur Atmosphäre hin öffnet, wenn der Kompressor einen vorgegebenen Förderdruck überschreitet. Der Kompressor ist dann mit der Atmosphäre verbunden und fördert nur noch in diese.

Zum Entleeren einer Luftfeder wird der erste Kolben und der zweite Kolben entgegen der Rückstellkraft der ersten Feder und der zweiten Feder durch den Luftdruck in der Luftfeder von seinem Sitz abgehoben und die Luftfeder ist dann mit der Atmosphäre verbunden. Die Rückstellkraft der ersten Feder ist so eingestellt, daß diese den ersten Kolben bei Erreichen des Restdruckes in der Luftfeder auf den Sitz zurückdrückt und somit die Verbindung der Luftfeder zur Atmosphäre sperrt. Eine weitere Entleerung der Luftfeder unter den Restdruck ist dann nicht mehr möglich.

Zum Entleeren einer Luftfeder wird das pneumatisch steuerbare Wegeventil wie folgt gesteuert: Eine Steuerleitung, die über ein zwischen den Luftfedern und dem pneumatisch steuerbaren Wegeventil gelegenes steuerbares weiteres Wegeventil geführt wird, wird mit dem Steuerraum des pneumatisch steuerbaren Wegeventils verbunden, der dann mit dem Luftdruck einer Luftfeder beaufschlagt ist. Infolgedessen wird der erste Kolben und der zweite Kolben entgegen der Rückstellkraft der ersten und zweiten Feder von seinem Sitz gehoben. Die Ablaßleitung wird ebenfalls über das steuerbare zweite Wegeventil in den Steuerraum geführt. Der Steuerraum enthält neben der Einlaßöffnung, in der die Steuerleitung und die Ablaßleitung münden, eine Ausgangsöffnung, von der ausgehend die Ablaßleitung mit dem Lufttrockner der Niveauregeleinrichtung verbunden ist. Zum Entleeren einer Luftfeder strömt die Luft aus der Luftfeder durch das steuerbare weitere Wegeventil und durch den Steuerraum in den Lufttrockner und von dort über einen Ausgang des pneumatisch steuerbaren Wegeventils in die Atmosphäre.

Das aus dem Kompressor von Wabco, Westinghouse Fahrzeugbremsen GmbH, bekannte pneumatisch steuerbare Wegeventil weist einen einfachen kompakten Aufbau auf; dennoch sind in ihm die Überdruckfunktion und die Restdruckhaltefunktion integriert. Es ist jedoch festzustellen, daß zum Entleeren einer Luftfeder der Steuerraum des pneumatisch steuerbaren Wegeventils ständig durchströmt wird. Um ein zu starkes Absinken des statischen Luftdruckes in dem Steuerraum zu vermeiden, ist in der Austrittsöffnung des Steuerraumes eine Drossel vorgesehen, die die Strömungsgeschwindigkeit der abzulassenden Luft stark reduziert. Dazu muß die Drossel einen sehr kleinen Strömungsquerschnitt aufweisen, so daß ein schnelles Entlüften der Luftfedern und damit einhergehend eine gewünschte schnelle Absenkung des Fahrzeuges (z. B. im Stillstand des Fahrzeuges) nicht möglich ist.

Der Erfindung liegt die Aufgabe zugrunde, eine Niveauregeleinrichtung mit einem pneumatisch steuerbaren Wegeventil zu schaffen, das eine Überdruckfunktion und eine Restdruckhaltefunktion enthält und das ein schnelles Entlüften der Luftfedern ermöglicht.

Gemäß den kennzeichnenden Merkmalen des Anspruchs 1 wird die Aufgabe dadurch gelöst, daß
- die Ablaßleitung getrennt von der Steuerleitung durch das pneumatisch steuerbare erste Wegeventil geführt wird und durch den ersten Kolben gesperrt ist, wenn sich dieser auf seinem Sitz befindet, und geöffnet ist, wenn der erste Kolben von seinem Sitz abgehoben ist, so daß dann Luft aus der Luftfeder in die Atmosphäre abgelassen werden kann.

Die mit der Erfindung erzielten Vorteile sind insbesondere darin zu sehen, daß ein schnelles Entlüften der Luftfedern über das pneumatisch steuerbare Wegeventil möglich ist, da die Ablaßleitung getrennt von der Steuerleitung durch dieses Wegeventil geführt wird und somit eine Drossel zur Reduzierung der Strömungsgeschwindigkeit in der Ablaßleitung zur Aufrechterhaltung des statischen Luftdrucks in der Steuerleitung bzw. in dem Steuerraum nicht notwendig ist.

Ein weiterer Vorteil der Erfindung wird verständlich, wenn man folgendes berücksichtigt: Im Grundzustand des Niveauregelsystems (d. h., wenn die Luftfedern weder aufgefüllt noch entleert werden) sollten die Luftfedern vom Lufttrockner getrennt sein, so daß keine Luft von den Luftfedern zu dem Lufttrockner strömen kann. In diesem Fall ist es möglich, zwischen den Luftfedern und dem Lufttrockner einen Drucksensor anzuordnen, mit dem jede Luftfeder zur Druckmessung verbunden werden kann, ohne daß dabei Luft aus der Luftfeder in den Lufttrockner strömt, was zu einem unerwünschten Druckverlust in der Luftfeder führen würde.

Die Trennung der Luftfedern von dem Lufttrockner wird erfindungsgemäß dadurch erreicht, daß die Ablaßleitung in dem pneumatisch steuerbaren ersten Wegeventil durch den ersten Kolben gesperrt wird, wenn sich dieser auf seinem Sitz befindet. Aufgrund dessen kann die Ablaßleitung direkt von den Luftfedern auf das pneumatisch steuerbare erste Wegeventil geführt werden, ohne das zweite steuerbare Wegeventil zu durchqueren. Dadurch wird auch ein schnelles Entlüften von zwei oder mehr Luftfedern der Niveauregeleinrichtung gleichzeitig ermöglicht, weil durch das pneumatisch steuerbare erste Wegeventil ein großer Luftstrom geführt werden kann. (Im Gegensatz dazu muß bei der von Wabco bekannten Niveauregeleinrichtung die Ablaßleitung über das zweite steuerbare Wegeventil geführt werden, um die Luftfedern im Grundzustand der Niveauregeleinrichtung vom Lufttrockner zu trennen. Da es sich bei dem zweiten Wegeventil um ein elektrisch steuerbares Wegeventil handelt, sind an ihm nur kleine Strömungsquerschnitte schaltbar. Aufgrund dessen wird ein schnelles gleichzeitiges Entlüften von zwei oder mehr Luftfedern unmöglich).

Ein erstes Ausführungsbeispiel der Erfindung gemäß Anspruch 2 ist dadurch gekennzeichnet, daß
- das pneumatisch steuerbare erste Wegeventil einen Raum enthält, in den der erste Kolben zumindest teilweise eintaucht, und daß
- die Ablaßleitung zwei Teilleitungen enthält, die jeweils an einem ihrer Enden in den Raum münden, und daß
- zumindest eine der Mündungsöffnungen durch den ersten Kolben verschlossen ist, wenn sich dieser auf seinem Sitz befindet, und beide Mündungsöffnungen geöffnet sind, wenn der erste Kolben von seinem Sitz abgehoben ist, so daß dann die beiden Teilleitungen über dem Raum miteinander verbunden sind.

Der Vorteil dieses Ausführungsbeispiels ist darin zu sehen, daß zumindest eine Mündungsöffnung durch Aufsetzen des ersten Kolbens auf diese einfach verschlossen und durch Abheben des Kolbens von dieser einfach geöffnet werden kann. Somit ist ein pneumatisch steuerbares Wegeventil gemäß diesem ersten Ausführungsbeispiel einfach herzustellen.

Gemäß einer Weiterbildung des ersten Ausführungsbeispiels nach Anspruch 3 mündet zumindest eine der Teilleitungen in einem Dichtsitz, auf dem der erste Kolben sitzt, wobei der erste Kolben durch die erste Feder auf dem Dichtsitz gehalten wird. Der Vorteil dieser Weiterbildung ist darin zu sehen, daß durch die Ausbildung eines Dichtsitzes eine zuverlässige Unterbrechung der Ablaßleitung erreicht wird, wenn die Luftfedern nicht entleert werden sollen.

Gemäß einer Weiterbildung des ersten Ausführungsbeispiels nach Anspruch 4 handelt es sich bei dem Raum um einen Ringraum oder (vorzugsweise) um eine Bohrung im Gehäuse des pneumatisch steuerbaren Wegeventils. Die Ausbildung des Raumes als kleinflächige Bohrung, in die der erste Kolben zumindest teilweise eintaucht, hat den Vorteil, daß die Fläche des Kolbens, an dem die Luft beim Entleeren einer Luftfeder vorbeiströmt, besonders klein ist (sie entspricht nämlich nur der kleinen Fläche der Bohrung). Aus diesem Grunde wird eine präzise Steuerung des pneumatisch steuerbaren ersten Wegeventils über den pneumatischen Steuereingang durch den Luftstrom in der Ablaßleitung nur im zu vernachlässigendem Maße beeinträchtigt (näheres siehe Figurenbeschreibung).

Ein zweites Ausführungsbeispiel der Erfindung gemäß Anspruch 5 ist dadurch gekennzeichnet, daß
- die Ablaßleitung zwei Teilleitungen enthält, die in axialer Richtung des Kolbens voneinander beabstandet jeweils an einem ihrer Enden auf der Mantelfläche des ersten Kolbens münden, und daß
- zwischen der Mantelfläche des ersten Kolbens und der Wand eines Gehäuses, in dem der erste Kolben axial geführt wird, eine Dichtung angeordnet ist, die mit dem ersten Kolben derart in Wirkverbindung steht, daß eine Verbindung der Teilleitungen entlang der Mantelfläche des ersten Kolbens gesperrt ist, wenn sich dieser auf seinem Sitz befindet, und die Verbindung freigegeben ist, wenn der erste Kolben von seinem Sitz abgehoben wird.

Der Vorteil dieses Ausführungsbeispiels ist darin zu sehen, daß durch den Luftdruck in der Ablaßleitung keine Kraft auf den ersten Kolben ausgeübt wird, die in axialer Richtung des Kolbens wirkt und diesen von seinem Sitz abheben könnte, so daß eine präzise Steuerung des pneumatisch steuerbaren ersten Wegeventils ausschließlich über den pneumatischen Steuereingang dieses Wegeventils erfolgt.

Gemäß einer Weiterbildung des zweiten Ausführungsbeispiels nach Anspruch 6 enthält der erste Kolben eine Nut, in der ein O-Ring angeordnet ist, wobei die Nut zwischen den beiden Teilleitungen liegt und zwischen dem ersten Kolben und der Gehäusewand radial verpreßt ist, wenn sich der Kolben auf seinem Sitz befindet, und oberhalb bzw. unterhalb der Teilleitungen liegt, wenn der erste Kolben von seinem Sitz abgehoben wird. Der Vorteil dieser Weiterbildung ist darin zu sehen, daß das pneumatisch steuerbare erste Wegeventil gemäß Anspruch 6 einfach herstellbar ist.

Gemäß einer Weiterbildung der Erfindung nach Anspruch 7 enthält die Ablaßleitung eine Drossel, die zwischen den Luftfedern und dem Lufttrockner angeordnet ist. Der Vorteil dieser Weiterbildung ist darin zu sehen, daß die aus einer Luftfeder der Niveauregeleinrichtung abgelassene Luft vor dem Eintritt in den Lufttrockner durch die Drossel entspannt wird, so daß eine besonders gute Regenerierung des Lufttrockners möglich ist. Es hat sich herausgestellt, daß bereits eine Drossel mit einem Strömungsquerschnitt von 1 mm bis 2 mm diese Funktion erfüllt.

Vorzugsweise ist die Drossel in der Ablaßleitung derart angeordnet, daß die Luft ausschließlich während des Entleerens einer Luftfeder durch diese strömt, so wie es auch in Anspruch 8 beansprucht wird. Der Vorteil dieser Weiterbildung ist darin zu sehen, daß die Drossel während des Auffüllens einer Luftfeder nicht durchströmt wird und somit den Auffüllvorgang nicht behindert. Die Drossel kann z. B. in dem Bereich liegen, in dem die Ablaßleitung in das pneumatisch steuerbare erste Wegeventil geführt wird, um die genannten Bedingungen zu erfüllen.

Ein Ausführungsbeispiel und weitere Vorteile der Erfindung werden im Zusammenhang mit den nachstehenden Figuren erläutert, darin zeigt:
- Fig. 1: eine Niveauregeleinrichtung in schematischer Darstellung,
- Fig. 2: eine Niveauregeleinrichtung in schematischer Darstellung,
- Fig. 3: ein pneumatisch steuerbares Wegeventil,
- Fig. 4: ein pneumatisch steuerbares Wegeventil.

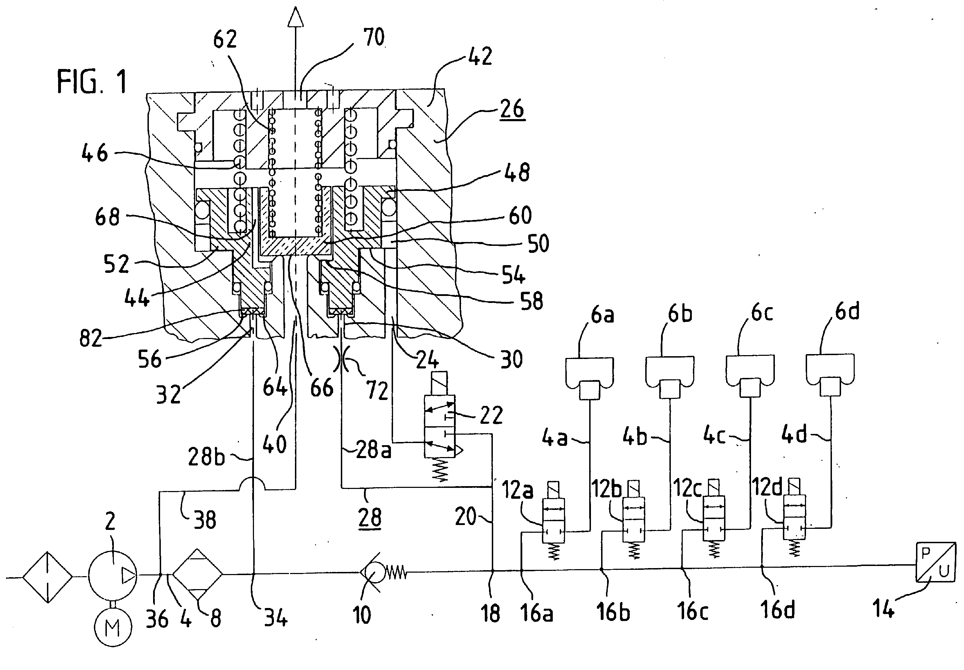

Figur 1 zeigt eine Niveauregeleinrichtung in schematischer Darstellung, wobei nur die für die nachfolgenden Erläuterungen notwendigen Bestandteile gezeigt sind. Die Niveauregeleinrichtung verfügt über eine Druckluftquelle in Form eines Kompressors 2, der über eine Druckluftleitung 4 mit den Luftfedern 6a bis 6d verbunden ist. Die Druckluftleitung 4 wird ausgehend von dem Kompressor 2 über einen Lufttrockner 8 und ein zu den Luftfedern 6a bis 6d öffnendes Rückschlagventil 10 geführt. Hinter dem Rückschlagventil 10 (vom Lufttrockner 8 aus gesehen) zweigen von der Druckluftleitung 4 Druckluftleitungen 4a bis 4d ab, von denen jeweils eine zu den Luftfedern 6a bis 6d führt. Jede Druckluftleitung 4a bis 4d enthält ein elektrisch steuerbares 2/2-Wegeventil 12a bis 12d, mit dem die Druckluftleitungen 4a bis 4d gesperrt bzw. durchgeschaltet werden können. Die Druckluftleitung 4 steht hinter dem Rückschlagventil 10 (vom Lufttrockner 8 aus gesehen) zusätzlich mit einem Drucksensor 14 in Verbindung, dessen Funktion später erläutert wird.

Zwischen dem Rückschlagventil 10 und den Abzweigungspunkten 16a bis 16d, in denen die Druckluftleitungen 4a bis 4d von der Druckluftleitung 4 abzweigen, zweigt in einem Abzweigungspunkt 18 eine Steuerleitung 20 von der Druckluftleitung 4 ab, die über ein elektrisch steuerbares 3/2-Wegeventil 22 auf den Steuereingang 24 des pneumatisch steuerbaren Wegeventils 26 geführt wird (das elektrisch steuerbare Wegeventil 22 wird in der Beschreibungeinleitung als steuerbares zweites Wegeventil bezeichnet; es verbindet in dem in der Figur 1 gezeigten Grundzustand den Steuereingang mit der Atmosphäre und im anderen Schaltzustand schaltet es die Steuerleitung 20 durch). Ferner zweigt zwischen dem Rückschlagventil 10 und den Abzweigungspunkten 16a bis 16d eine Ablaßleitung 28 von der Druckluftleitung 4 ab, dessen erster Teil 28a in einer Eintrittsöffnung 30 des pneumatisch steuerbaren Wegeventils mündet. Der zweite Teil 28b der Ablaßleitung 28 tritt in der Austrittsöffnung 32 wieder aus dem pneumatisch steuerbaren Wegeventil 26 aus. Die Teilleitung 28b wird ausgehend von der Austrittsöffnung 32 in einem Punkt 34 auf die Druckluftleitung 4 geführt, der zwischen dem Lufttrockner 8 und dem Rückschlagventil 10 liegt.

Zwischen dem Kompressor 2 und dem Lufttrockner 8 zweigt in einem Punkt 36 eine weitere Druckluftleitung 38 von der Druckluftleitung 4 ab, die von dort aus auf einen Ausgang 40 des pneumatisch steuerbaren Wegeventils 26 geführt wird. Die Druckluftleitung 38 verbindet entweder die Luftfedern 6a bis 6d über die Ablaßleitung 28 oder aber den Kompressor 2 mit der Atmosphäre. Wie dies geschieht, wird weiter unten näher erläutert.

Im folgenden wird der Aufbau des pneumatisch steuerbaren Wegeventils 26 im einzelnen erläutert: Das pneumatisch steuerbare Wegeventil 26 weist ein Gehäuse 42 auf, in dem ein erster Kolben in Form eines vorzugsweise rotationssymmetrischen Stufenkolbens 44 angeordnet ist. Der Stufenkolben 44 ist mit einer ersten Feder 46 beaufschlagt und entgegen der Rückstellkraft dieser in dem Gehäuse 42 axial beweglich angeordnet, wobei er durch eine Zylinderwand des Gehäuses 42 geführt wird. Unterhalb der ersten Stufe 48 des Stufenkolbens 44 befindet sich ein Ringraum 50, in dem der Steuereingang 24 des pneumatisch steuerbaren Wegeventils 26 mündet. Mit einer zweiten Stufe 52 sitzt der Stufenkolben 44 vorzugsweise auf einem Sitz 54 des Gehäuses 42 auf. Das Gehäuse 42 des pneumatisch steuerbaren Wegeventils 26 weist neben dem ersten Ringraum 50 einen weiteren Ringraum 56 auf, in dem sowohl die Eintrittsöffnung 30 als auch die Austrittsöffnung 32 der Ablaßleitung 28 mündet. Der Stufenkolben 44 ragt in den zweiten Ringraum 56 hinein und dichtet die Eintrittsöffnung 30 und die Austrittsöffnung 32 der Ablaßleitung 28 mit einer Ringdichtung zum Ringraum 56 hin ab, wenn er sich auf seinem Sitz 54 befindet (so wie es in der Figur 1 gezeigt ist). Neben den bisher genannten Bestandteilen weist der Stufenkolben 44 ferner einen Mitnehmer 58 auf, dessen Funktion später erläutert wird.

Das pneumatisch steuerbare Wegeventil 26 weist neben dem Stufenkolben 44 einen vorzugsweise rotationssymmetrischen axial beweglichen zweiten Kolben 60 auf, der koaxial zu dem Stufenkolben 44 angeordnet ist und von diesem umfaßt wird. Der zweite Kolben 60 wird durch die Innenwand des Stufenkolbens 44 axial geführt und durch eine zweite Feder 62 auf einem Dichtsitz 64 gehalten. Die Stirnfläche 66 des zweiten Kolbens 60 versperrt den Ausgang 40 des pneumatisch steuerbaren Wegeventils 26, wenn sich der zweite Kolben 60 auf seinem Dichtsitz befindet. Wird der zweite Kolben 60 hingegen entgegen der Rückstellkraft der zweiten Feder 62 von seinem Dichtsitz abgehoben, so gibt er über einen Kanal 68, der zwischen dem Stufenkolben 44 und dem zweiten Kolben 60 geführt ist, und über eine Austrittsöffnung 70 im Gehäuse 42 eine Verbindung des Ausganges 40 zur Atmosphäre frei.

Im folgenden wird erläutert, wie die Luftfeder 6a durch den Kompressor 2 mit Druckluft befüllt werden kann: Zunächst wird durch eine (in der Figur 1 nicht gezeigte) Steuereinheit ein Signal auf den Steuereingang des elektrisch steuerbaren 2/2-Wegeventils 12a gegeben, so daß dieses von dem in der Figur 1 gezeigten Grundzustand in seinen anderen Schaltzustand übergeht, in dem die Druckluftleitung 4a "durchgeschaltet" ist. Danach beginnt der Kompressor 2 zu laufen und fördert über den Lufttrockner 8, das Rückschlagventil 10 und das 2/2-Wegeventil 12a Druckluft in die Luftfeder 6a. Die von dem Kompressor 2 geförderte Druckluft liegt über die Druckluftleitung 38 auch an der Stirnfläche 66 des zweiten Kolbens 60 an. Wird beim Auffüllen der Luftfeder 6a ein vorgegebener Förderdruck durch den Kompressor 2 überschriften, so hebt der zweite Kolben 60 entgegen der Rückstellkraft der zweiten Feder 62 von seinem Dichtsitz 64 ab, so daß dann die Druckluftleitung 38 über den Kanal 68 und die Austrittsöffnung 70 mit der Atmosphäre verbunden ist. Der Kompressor 2 fördert dann nicht mehr in die Luftfeder 6a, sondern nur noch in die Atmosphäre. Hierdurch wird sichergestellt, daß die Luftfeder 6a nicht über einen vorgegebenen Luftdruck hinaus mit Druckluft befüllt werden kann (Überdruckfunktion). Für das Auffüllen der Luftfedern 6b bis 6d gilt entsprechendes.

Im folgenden wird erläutert, wie die Luftfeder 6a entleert werden kann: Dazu wird zunächst das 2/2-Wegeventil 12a von dem in der Figur 1 gezeigten Grundzustand in seinen anderen Schaltzustand überführt, so daß die Druckluftleitung 4a durchgeschaltet ist. Darüber hinaus wird von der (in der Figur 1 nicht gezeigten) Steuereinheit ebenfalls ein Steuersignal auf den Steuereingang des elektrisch steuerbaren 3/2-Wegeventils 22 gegeben, so daß dies ebenfalls von seinem in der Figur 1 gezeigten Grundzustand, in dem der Steuereingang 24 mit der Atmosphäre verbunden ist, in seinen anderen Schaltzustand übergeht, in dem die Steuerleitung 20 "durchgeschaltet" ist. Nach dem Umschalten der Wegeventile 12a und 22 in den anderen Schaltzustand kann aus der Luftfeder 6a durch die Druckluftleitung 4a und durch die Steuerleitung 20 über den Steuereingang 24 Druckluft in den ersten Ringraum 50 strömen. Nach kurzer Zeit liegt in dem ersten Ringraum 50 der gleiche Luftdruck wie in der Luftfeder 6a an.

Aufgrund des Luftdruckes in dem ersten Ringraum 50, der auf die erste Stufe 48 des Stufenkolbens 44 wirkt, wird der Stufenkolben 44 entgegen der Rückstellkraft der ersten Feder 46 von seinem Sitz 54 abgehoben. Nach dem Abheben wirkt die Druckluft in dem Ringraum 50 sowohl auf die Stirnfläche der ersten Stufe 48 als auch auf die Stirnfläche der zweiten Stufe 52 des ersten Stufenkolbens 44, so daß sich die auf den ersten Stufenkolben 44 wirkende Kraft entsprechend vergrößert. Diese Kraft ist groß genug, auch den zweiten Kolben 60 mit Hilfe des Mitnehmers 58 entgegen der Rückstellkraft der zweiten Feder 62 von seinem Dichtsitz 64 abzuheben, so daß der zweite Kolben 60 die Verbindung zur Atmosphäre freigibt.

Ferner wird der Stufenkolben 44 von den Dichtsitzen der Eintrittsöffnung 30 bzw. der Austrittsöffnung 32 abgehoben, wodurch diese geöffnet werden. Infolgedessen ist die erste Teilleitung 28a mit der zweiten Teilleitung 28b über den zweiten Ringraum 56 miteinander verbunden. Aus der Luftfeder 6a kann nunmehr durch die Druckluftleitung 4a, die erste Teilleitung 28a, durch den Ringraum 56, durch die zweite Teilleitung 28b, durch den Lufttrockner 8 und durch die Druckluftleitung 38 (die in diesem Fall also auch Bestandteil der Ablaßleitung ist), durch den Kanal 68 und durch die Austrittsöffnung 70 Luft in die Atmosphäre strömen.

Erreicht der Luftdruck in der Luftfeder 6a einen vorgegebenen Restdruck, so sinkt auch der Luftdruck in den ersten Ringraum 50 auf diesen Restdruck ab und der Stufenkolben 44 wird durch die Rückstellkraft der ersten Feder 46 auf seinen Sitz 54 gedrückt. Darüber hinaus wird der zweite Kolben 60 durch die Rückstellkraft der zweiten Feder 62 auf seinen Dichtsitz 64 gedrückt. Mit Erreichen des Restdruckes wird somit die Verbindung der Luftfeder 6a zur Atmosphäre gesperrt (Restdruckhaltefunktion).

Soll die Entleerung der Luftfeder 6a gezielt beendet werden, so werden durch die Steuereinheit die Ventile 12a und 22 in den in der Figur 1 gezeigten Grundzustand überführt. Der Steuereingang 24 des pneumatisch steuerbaren Wegeventils 26 ist dann über das 3/2-Wegeventil 22 mit der Atmosphäre verbunden, so daß der in dem ersten Ringraum 50 befindliche Luftdruck auf Atmosphärendruck absinkt. Der Stufenkolben 44 wird dann durch die Rückstellkraft der ersten Feder 46 auf seinen Sitz 54 und der zweite Kolben 60 wird dann entgegen der Rückstellkraft der zweiten Feder 62 auf seinen Dichtsitz 64 gedrückt. Die Verbindung der Luftfeder 64 zur Atmosphäre ist dann unterbrochen und die Luftfeder 6a kann nicht weiter entleert werden, weil die Teilleitungen 28a und 28b nicht mehr über den zweiten Ringraum 56 miteinander in Verbindung stehen. Die Luftfedern 6b bis 6d werden entsprechend entleert.

Es ist ebenfalls möglich, zwei oder mehr Luftfedern 6a bis 6d gleichzeitig zu entleeren. Es sind dann die den entsprechenden Luftfedern 6a bis 6d zugeordneten Wegeventile 12a bis 12d vom Grundzustand in den anderen Schaltzustand zu überführen. Beim gleichzeitigen Entleeren mehrerer Luftfedern 6a bis 6d bietet die erfindungsgemäße Niveauregeleinrichtung den Vorteil, daß der gesamte Luftstrom, der sich aus den einzelnen Luftströmen aus den Luftfedern 6a bis 6d zusammensetzt, ausschließlich über das pneumatisch steuerbare Wegeventil 26 geführt wird. Da an diesem große Strömgungsquerschnitte geschaltet werden können, ist ein schnelles Durchströmen dieses Wegeventils 26 auch dann gewährleistet, wenn mehrere Luftfedern 6a bis 6d gleichzeitig entleert werden sollen. Somit ist auch ein schnelles Entleeren mehrerer Luftfedern gleichzeitig möglich.

In der ersten Teilleitung 28a der Ablaßleitung 28 befindet sich vorzugsweise eine Drossel 72, mit der die in einer Luftfeder 6a bis 6d befindliche Druckluft vor dem Eintritt in den Lufttrockner entspannt wird. Hierdurch wird eine besonders gute Regeneration des Lufttrockners 8 erreicht.

Im folgenden wird erläutert, wie mit Hilfe des Drucksensors 14 der Luftdruck in der Luftfeder 6a gemessen werden kann: Dazu wird zunächst von der Steuereinheit das 2/2-Wegeventil 12a von dem in der Figur 1 gezeigten Grundzustand in den anderen Schaltzustand überführt. In den Druckluftleitungen 4a und 4 und somit am Drucksensor 14 liegt dann der Luftdruck der Luftfeder 6a an, so daß dieser mit Hilfe des Drucksensors 14 meßbar ist. Bei der Druckluftmessung in der Luftfeder 6a kann durch das Rückschlagventil 10 keine Luft in den Lufttrockner 8 abfließen, da dieses zum Lufttrockner hin schließt. Darüber hinaus kann aus der Luftfeder 6a auch über das pneumatisch steuerbare Wegeventil 26 keine Luft in der Lufttrockner 8 abfließen, da das 3/2-Wegeventil 22 sich im Grundzustand befindet und die Steuerleitung 20 sperrt, so daß der Ringraum 50 nicht mit Druckluft beaufschlagt wird. Darüber hinaus reicht die durch die Eintrittsöffnung 30 bereitgestellte Fläche nicht aus, um mit Hilfe des Luftdruckes in der Luftfeder 6a den Stufenkolben 44 von seinem Sitz 54 entgegen der Rückstellkraft der ersten Feder 46 abzuheben. Die Ablaßleitung 28 bleibt somit durch den Stufenkolben 44 des pneumatisch steuerbaren Wegeventils 26 gesperrt und es kann keine Luft in den Lufttrockner 8 abfließen. Die Luftdruckmessung mit Hilfe des Drucksensors 14 wird somit nicht durch ein Abströmen von Druckluft und einem damit einhergehenden Druckabfall in der Luftfeder 6a verfälscht. Der Luftdruck in den Luftfedern 6b bis 6d kann entsprechend gemessen werden.

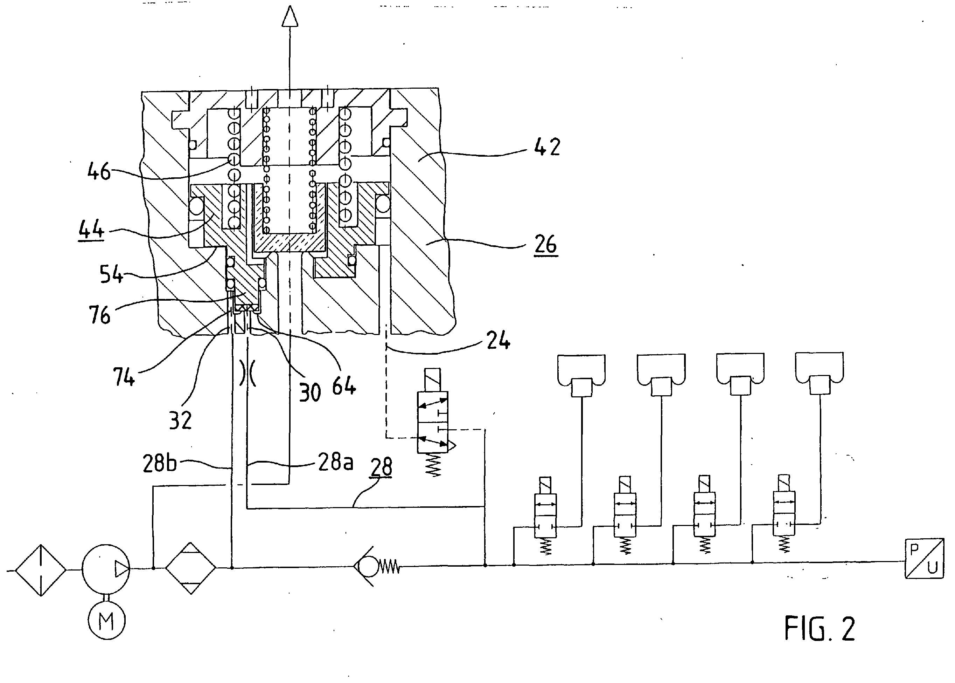

Figur 2 zeigt eine Niveauregeleinrichtung in schematischer Darstellung, die weitestgehend genauso aufgebaut ist, wie die in der Figur 1 gezeigte Niveauregeleinrichtung. Darüber hinaus ist auch die Funktionalität der in der Figur 2 gezeigten Niveauregeleinrichtung mit der Funktionalität der in der Figur 1 gezeigten Niveauregeleinrichtung identisch, so daß diesbezüglich auf die Figurenbeschreibung zu der Figur 1 verwiesen wird. Ein Unterschied zwischen der in der Figur 2 und der in der Figur 1 gezeigten Niveauregeleinrichtung ist lediglich im Aufbau des pneumatisch steuerbaren Wegeventils 26 zu sehen. Bei dem in der Figur 2 gezeigten pneumatisch regelbaren Wegeventil 26 liegt die Eintrittsöffnung 30, in der die erste Teilleitung 28a der Ablaßleitung 28 mündet, und die Austrittsöffnung 32, in der die zweite Teilleitung 28b der Ablaßleitung 28 mündet, in einer Bohrung 74 des Gehäuses 42, die vorzugsweise eine kreisförmige Grundfläche hat. In die Bohrung 74 ragt ein vorzugsweise rotationssymmetrischer Fortsatz 76 des Stufenkolbens 44 hinein, der die Bohrung 74 weitgehend ausfüllt, wenn sich der Stufenkolben 44 auf seinem Sitz 54 befindet. Die Eintrittsöffnung 30 der ersten Teilleitung 28a mündet in einem Dichtsitz 64, auf dem der Fortsatz 76 des Stufenkolbens 44 sitzt und dort durch die Rückstellkraft der ersten Feder 46 gehalten wird, wenn sich der Stufenkolben 44 auf seinem Sitz 54 befindet. Wird der Stufenkolben 44 von seinem Sitz 54 entgegen der Rückstellkraft der ersten Feder 46 abgehoben (wie dies geschieht siehe Figurenbeschreibung zu Figur 1), so hebt auch der Fortsatz 76 von dem Dichtsitz 64 ab und die beiden Teilleitungen 28a und 28b stehen über die Bohrung 74 miteinander in Verbindung. Es kann dann Luft aus einer der oder mehreren Luftfedern der Niveauregeleinrichtung in die Atmosphäre abgelassen werden (näheres siehe Figurenbeschreibung zu Figur 1).

Die Grundfläche der Bohrung wird möglichst kleinflächig ausgebildet, zumindest wesentlich kleiner als die Ringfläche des Ringraumes 56, in dem bei dem pneumatisch steuerbaren Wegeventil 26 gemäß Figur 1 die Öffnungen 30 und 32 münden. Aus diesem Grunde ist die Kraft, die auf den Stufenkolben 44 beim Durchströmen der Bohrung 74 ausgeübt wird, wesentlich kleiner als die Kraft, die auf den Stufenkolben 44 beim Durchströmen des Ringraumes 56 ausgeübt wird, wenn Luft aus einer der oder mehreren Luftfedern abgelassen wird. Bei dem in der Figur 2 gezeigten pneumatisch steuerbaren Wegeventil 26 wird die exakte Steuerungsmöglichkeit über den Steuereingang 24 mit Hilfe des statischen Luftdrucks in den Luftfedern also deutlich weniger beeinflußt als bei dem in der Figur 1 gezeigten pneumatisch-steuerbaren Wegeventil 26.

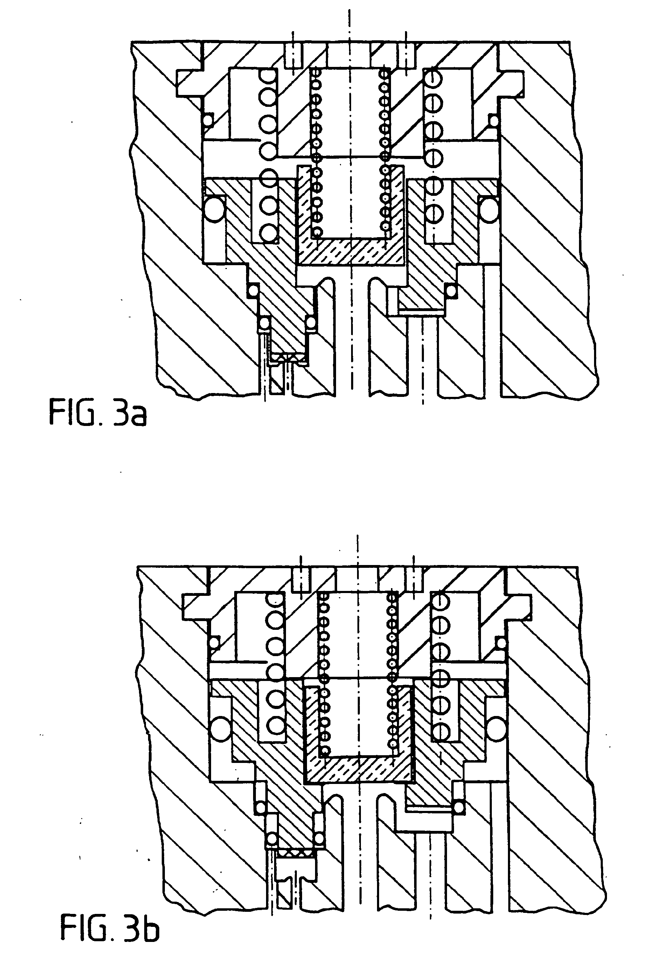

Figur 3a zeigt das in der Figur 2 dargestellte pneumatisch steurebare Wegeventil 26 in dem Schaltzustand, in dem es den Kompressor mit der Atmosphäre verbindet (Überdruckfunktion). Figur 3b zeigt das in der Figur 2 dargestellte pneumatisch steuerbare Wegeventil 26 in dem Schaltzustand, in dem es eine oder mehrere Luftfeder(n) zum Entleeren mit der Atmosphäre verbindet.

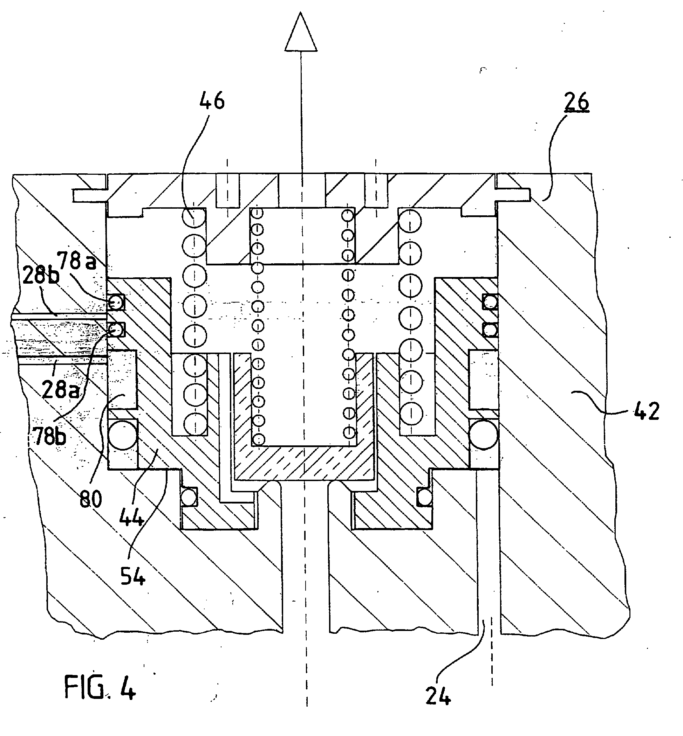

Figur 4 zeigt ein pneumatisch steuerbares Wegeventil 26, bei dem die Teilleitungen 28a und 28b der Ablaßleitung 28 derart durch das Gehäuse 42 hindurch seitlich auf die Mantelfläche des Stufenkolbens 44 geführt werden, daß sie in axialer Richtung des Stufenkolbens 44 voneinander beabstandet auf der Mantelfläche münden. Der Stufenkolben 44 enthält zwei Nuten, wobei in jeder Nut ein O-Ring 78a bzw. 78b liegt. Wenn der erste Stufenkolben 44 auf seinem Sitz 54 sitzt, befindet sich der erste O-Ring 78a oberhalb der Teilleitung 28b und der zweite O-Ring 78b zwischen den Teilleitungen 28a und 28b. Jeder O-Ring ist zwischen dem Stufenkolben 44 und der Gehäusewand des Gehäuses 42 radial verpreßt, so daß weder Luft von einer Teilleitung 28a in die andere Teilleitung 28b noch Luft von einer aus dieser Teilleitungen oberhalb oder unterhalb des Stufenkolbens 44 gelangen kann.

Wird der Stufenkolben 44 entgegen der Rückstellkraft der ersten Feder 46 von seinem Sitz 54 abgehoben (näheres siehe Figurenbeschreibung zu Figur 1), so werden dabei die O-Ringe 78a und 78b soweit mitgeführt, daß der O-Ring 78b oberhalb der Teilleitung 28b liegt. Die beiden Teilleitungen 28a und 28b sind dann über eine Ringnut 80 in der Mantelfläche des Stufenkolbens 44 miteinander verbunden, so daß Luft aus der Teilleitung 28a in die Teilleitung 28b strömen kann und somit eine oder mehrere der Luftfedern der Niveauregeleinrichtung mit der Atmosphäre verbunden werden können (näheres siehe Figurenbeschreibung zu Figur 1).

Das pneumatisch steuerbare Wegeventil 26 gemäß Figur 4 hat den Vorteil, daß durch die Druckluft in den Teilleitungen 28a und 28b in keinem Zustand der Niveauregeleinrichtung eine resultierende Kraft auf den Stufenkolben 44 ausgeübt wird, die entgegen der Rückstellkraft der ersten Feder 46 wirkt. Somit wird die Steuerung des pneumatisch steuerbaren Wegeventils 46 über den Steuereingang 24 nicht durch den Luftdruck in der Ablaßleitung 28 beeinflußt.
- 2: Kompressor
- 4, 4a - 4d: Druckluftleitung
- 6a - 6d: Luftfedern
- 8: Lufttrockner
- 10: Rückschlagventil
- 12a - 12d: 2/2-Wegeventil
- 14: Drucksensor
- 16a - 16d, 18: Abzweigungspunkt
- 20: Steuerleitung
- 22: 3/2-Wegeventil
- 24: Steuereingang
- 26: pneumatisch steuerbares Wegeventil
- 28: Ablaßleitung
- 28a, b: Teilleitung der Ablaßleitung
- 30: Eintrittsöffnung
- 32: Austrittsöffnung
- 34, 36: Punkt
- 38: Druckluftleitung
- 40: Ausgang
- 42: Gehäuse
- 44: Stufenkolben
- 46: erste Feder
- 48: erste Stufe
- 50: Ringraum
- 52: zweite Stufe
- 54: Sitz
- 56: Ringraum
- 58: Mitnehmer
- 60: zweiter Kolben
- 62: zweite Feder
- 64: Dichtsitz
- 66: Stirnfläche des zweiten Kolbens
- 68: Kanal
- 70: Austrittsöffnung
- 72: Drossel
- 74: Bohrung
- 76: Fortsatz
- 78: O-Ring
- 80: Bohrung bzw. Ringnut
- 82: Ringdichtung

## Patentansprüche

1. Niveauregeleinrichtung für Fahrzeuge mit Luftfedern (6a bis 6d), die folgende Merkmale aufweist:
- eine Druckluftquelle (2), die zum Auffüllen jeder Luftfeder (6a bis 6d) über einen Lufttrockner (8) mit dieser verbindbar ist und über ein pneumatisch steuerbares erstes Wegeventil (26) mit der Atmosphäre verbindbar ist, wenn ein vorgegebener Förderdruck überschritten wird
- jede Luftfeder (6a bis 6d) ist zum Entleeren über eine Ablaßleitung (28), die über das pneumatisch steuerbare erste Wegeventil (26) und über den Lufttrockner (8) geführt wird, mit der Atmosphäre verbindbar, wobei ein pneumatischer Steuereingang (24) des ersten Wegeventils (26) dann über eine Steuerleitung (20), die über ein zwischen den Luftfedern (6a bis 6d) und dem ersten Wegeventil (26) gelegenes steuerbares zweites Wegeventil (22) geführt wird, mit dem Luftdruck einer Luftfeder (6a bis 6d) beaufschlagt ist,
wobei das pneumatisch steuerbare erste Wegeventil (26) folgende Bestandteile enthält:
- einen ersten Kolben (44), der durch eine erste Feder (46) auf einem Sitz (54) gehalten wird, mit einem Mitnehmer (58), wobei der erste Kolben (44) entgegen der Rückstellkraft der ersten Feder (46) von seinem Sitz (54) abhebt, wenn der pneumatische Steuereingang (24) mit dem Luftdruck einer Luftfeder (6a bis 6d) beaufschlagt wird
- einen zweiten Kolben (60), der durch eine zweite Feder (62) auf einem Dichtsitz (64) gehalten wird und dann eine Verbindung zur Atmosphäre sperrt, und der mit dem ersten Kolben (44) in Wirkverbindung steht, und der eine Stirnfläche (66) aufweist, die mit der Druckluft der Druckluftquelle (2) und der Ablaßleitung (28) beaufschlagbar ist, wobei der zweite Kolben (60) entgegen der Rückstellkraft der zweiten Feder (62) von seinem Dichtsitz (64) entweder durch den Mitnehmer (58) des ersten Kolbens (44), wenn dieser von seinem Sitz (54) abgehoben wird, oder durch die von der Druckluftquelle (2) erzeugte Druckluft, wenn diese den vorgegebenen Förderdruck überschreitet, abgehoben wird und dann mindestens eine Luftfeder (6a bis 6d) bzw. die Druckluftquelle (2) mit der Atmosphäre verbunden ist
**dadurch gekennzeichnet, daß**
- die Ablaßleitung (28) getrennt von der Steuerleitung (20) durch das pneumatisch steuerbare erste Wegeventil (26) geführt wird und durch den ersten Kolben (44) gesperrt ist, wenn sich dieser auf seinem Sitz (54) befindet, und geöffnet ist, wenn der erste Kolben (44) von seinem Sitz (54) abgehoben ist, so daß dann Luft aus einer Luftfeder (6a bis 6d) in die Atmosphäre abgelassen werden kann.

2. Niveauregeleinrichtung nach Anspruch 1, **dadurch gekennzeichnet, daß**
- das pneumatisch steuerbare erste Wegeventil (26) einen Raum (50, 74) enthält, in den der Kolben (44) zumindest teilweise eintaucht, und daß
- die Ablaßleitung (28) zwei Teilleitungen (28a und 28b) enthält, die jeweils an einem ihrer Enden (30, 32) in den Raum (50, 74) münden, und daß
- zumindest eine der Mündungsöffnungen (30, 32) durch den ersten Kolben (44) verschlossen ist, wenn sich dieser auf seinem Sitz (54) befindet, und beide Mündungsöffnungen (30, 32) geöffnet sind, wenn der erste Kolben (44) von seinem Sitz (54) abgehoben ist, so daß dann die beiden Teilleitungen (28a, 28b) über den Raum (50, 74) miteinander verbunden sind.

3. Niveauregeleinrichtung nach Anspruch 2, **dadurch gekennzeichnet, daß** zumindest eine der Teilleitungen (28a, 28b) in einem Dichtsitz (64) mündet, auf dem der erste Kolben (44) sitzt, und daß der erste Kolben (44) durch die erste Feder (46) auf dem Dichtsitz (64) gehalten wird.

4. Niveauregeleinrichtung nach einem der Ansprüche 2 bis 3, **dadurch gekennzeichnet, daß** es sich bei dem Raum (50, 74) um einen Ringraum (50) oder um eine Bohrung (74) im Gehäuse (42) des pneumatisch steuerbaren ersten Wegeventils (26) handelt.

5. Niveauregeleinrichtung nach Anspruch 1, **dadurch gekennzeichnet, daß**
- die Ablaßleitung (28) zwei Teilleitungen (28a, 28b) enthält, die in axialer Richtung des ersten Kolbens (44) voneinander beabstandet jeweils an einem ihrer Enden auf der Mantelfläche des ersten Kolbens (44) münden, und daß
- zwischen der Mantelfläche des ersten Kolbens (44) und der Wand eines Gehäuses (42), in dem der erste Kolben (44) axial geführt wird, eine Dichtung (78b) angeordnet ist, die mit dem ersten Kolben (44) derart in Wirkverbindung steht, daß eine Verbindung der Teilleitungen (28a, 28b) entlang der Mantelfläche des ersten Kolbens (44) gesperrt ist, wenn sich dieser auf seinem Sitz (54) befindet, und die Verbindung freigegeben ist, wenn der erste Kolben (44) von seinem Sitz (54) abgehoben wird.

6. Niveaurregeleinrichtung nach Anspruch 5, **dadurch gekennzeichnet, daß** der erste Kolben (44) eine Nut enthält, in der ein O-Ring (78b) angeordnet ist, wobei die Nut zwischen den beiden Teilleitungen (28a, 28b) liegt und zwischen dem ersten Kolben (44) und der Zylinderwand radial verpreßt ist, wenn sich der erste Kolben (44) auf seinem Sitz befindet, und oberhalb bzw. unterhalb der beiden Teilleitungen (28a, 28b) liegt, wenn der erste Kolben (44) von seinem Sitz (54) abgehoben wird.

7. Niveauregeleinrichtung nach einem der Ansprüche 1 bis 6, **dadurch gekennzeichnet, daß** die Ablaßleitung (28) eine Drossel (72) enthält, die zwischen den Luftfedern (6a bis 6d) und dem Lufttrockner (8) angeordnet ist.

8. Niveauregeleinrichtung nach Anspruch 7, **dadurch gekennzeichnet, daß** die Drossel (72) in der Ablaßleitung (28) derart angeordnet ist, daß die Luft ausschließlich während des Entleerens einer Luftfeder (6a bis 6d) durch diese strömt.

## Claims

1. Ride level control device for vehicles with air springs (6a to 6d), which has the following features:
- a compressed air source (2) which can be connected to each air spring (6a to 6d) via an air dryer (8) in order to fill up these air springs (6a to 6d), and can be connected to the atmosphere via a pneumatically controllable first directional control valve (26) when a predefined feed pressure is exceeded,
- for the purpose of emptying, each air spring (6a to 6d) can be connected to the atmosphere via an outlet line (28) which leads via the pneumatically controllable first directional control valve (26) and via the air dryer (8), wherein the air pressure of an air spring (6a to 6d) is applied to a pneumatic control inlet (24) of the first directional control valve (26) via a control line (20) which leads via a controllable second directional control valve (22) which is located between the air springs (6a to 6d) and the first directional control valve (26),
wherein the pneumatically controllable first directional control valve (26) contains the following components:
- a first piston (44) which is held on a seat (54) by means of a first spring (46) and has a driver (58), wherein the first piston (44) lifts off from its seat (54) counter to the restoring force of the first spring (46) when the air pressure of an air spring (6a to 6d) is applied to the pneumatic control inlet (24),
- a second piston (60) which is held on a sealing seat (64) by means of a second spring (62) and then blocks a connection to the atmosphere, and is operatively connected to the first piston (44) and has an end face (66) to which the compressed air of the compressed air source (2) and the outlet line (28) can be applied, wherein the second piston (60) is lifted off from its sealing seat (64) counter to the restoring force of the second spring (62) either by the driver (58) of the first piston (44) when the latter is lifted off from its seat (54), or by the compressed air generated by the compressed air source (2), when said compressed air exceeds the predefined feed pressure, and at least one air spring (6a to 6d) or the compressed air source (2) is then connected to the atmosphere,
**characterized in that**
- the outlet line (28) is led, separately from the control line (20) through the pneumatically controllable first directional control valve (26) and is blocked by the first piston (44) when the latter is located on its seat (54), and is opened when the first piston (44) is lifted off from its seat (54) so that air can then be let out into the atmosphere from an air spring (6a to 6d).

2. Ride level control device according to Claim 1, **characterized in that**
- the pneumatically controllable first directional control valve (26) contains a space (50, 74) into which the piston (44) at least partially dips, and **in that**
- the outlet line (28) contains two component lines (28a and 28b) which each open into the space (50, 74) at one of their ends (30, 32), and **in that**
- at least one of the mouth openings (30, 32) is closed off by the first piston (44) when the latter is located on a seat (54), and both mouth openings (30, 32) are opened when the first piston (44) is lifted off from its seat (54) so that the two component lines (28a, 28b) are then connected to one another via the space (50, 74).

3. Ride level control device according to Claim 2, **characterized in that** at least one of the component lines (28a, 28b) opens into a sealing seat (64) on which the first piston (44) is seated, and **in that** the first piston (44) is held on the sealing seat (64) by the first spring (46).

4. Ride level control device according to one of Claims 2 to 3, **characterized in that** the space (50, 74) is an annular space (50) or a bore (74) in the housing (42) of the pneumatically controllable first directional control valve (26).

5. Ride level control device according to Claim 1, **characterized in that**
- the outlet line (28) contains two component lines (28a, 28b) which are spaced apart from one another in the axial direction of the first piston (44) and each open at one of their ends on the lateral surface of the first piston (44), and **in that**
- a seal (78b) is arranged between the lateral surface of the first piston (44) and the wall of a housing (42) in which the first piston (44) is guided axially, said seal (78b) being operatively connected to the first piston (44) in such a way that a connection of the component lines (28a, 28b) along the lateral surface of the first piston (44) is blocked when said first piston (44) is located on its seat (54), and the connection is opened when the first piston (44) is lifted off from its seat (54).

6. Ride level control device according to Claim 5, **characterized in that** the first piston (44) contains a groove in which an 0-ring (78b) is arranged, wherein the groove is located between the two component lines (28a, 28b) and is pressed radially between the first piston (44) and the cylinder wall when the first piston (44) is located on its seat, and is located above or below the two component lines (28a, 28b) when the first piston (44) is lifted off from its seat (54).

7. Ride level control device according to one of Claims 1 to 6, **characterized in that** the outlet line (28) contains a throttle (72) which is arranged between the air springs (6a to 6d) and the air dryer (8).

8. Ride level control device according to Claim 7, **characterized in that** the throttle (72) is arranged in the outlet line (28) in such a way that that the air flows through an air spring (6a to 6d) exclusively while said air spring (6a to 6d) is being emptied.

## Revendications

1. Dispositif de régulation du niveau pour véhicules dotés d'amortisseurs pneumatiques (6a à 6d), qui présente les caractéristiques suivantes :
- une source (2) d'air sous pression qui peut être reliée à chaque amortisseur pneumatique (6a à 6d) par l'intermédiaire d'un séchoir d'air (8) pour être remplie et qui peut être reliée à l'atmosphère par une première soupape (26) commandée pneumatiquement lorsqu'une pression de transport prédéterminée est dépassée,
- pour être vidé, chaque amortisseur pneumatique (6a à 6d) peut être relié à l'atmosphère par un conduit d'évacuation (28) qui passe par la première soupape de passage (26) commandée pneumatiquement et par le séchoir d'air (8), la pression d'air d'un amortisseur pneumatique (6a à 6d) étant appliquée sur une entrée (24) de commande pneumatique de la première soupape de passage (26) par un conduit-pilote (20) qui passe par une deuxième soupape de passage asservie (22) située entre les amortisseurs pneumatiques (6a à 6d) et la première soupape de passage (26),
la première soupape de passage (26) commandée pneumatiquement contient les composants suivants :
- un premier piston (44) qui est maintenu sur un siège (54) par un premier ressort (46) et qui présente un dispositif d'entraînement (58), le premier piston (44) s'éloignant de son siège (54) en opposition à la force de rappel du premier ressort (46) lorsque la pression d'air dans l'amortisseur pneumatique (6a à 6d) est appliquée sur l'entrée de commande pneumatique (24),
- un deuxième piston (60) qui est maintenu par un deuxième ressort (62) sur un siège d'étanchéité (64) bloque alors la liaison à l'atmosphère, coopère avec le premier piston (44) et présente une surface frontale (66) sur laquelle la pression d'air de la source (2) d'air sous pression et du conduit d'évacuation (28) est appliquée, le deuxième piston (60) étant éloigné de son siège d'étanchéité (64) en opposition à la force de rappel du deuxième ressort (62), soit par le dispositif d'entraînement (58) du premier piston (44) lorsque ce dernier est éloigné de son siège (54) soit par la pression d'air délivrée par la source (2) d'air sous pression lorsque cette pression dépasse la pression de transport prédéterminée, au moins un amortisseur pneumatique (6a à 6d) ou la source (2) d'air sous pression étant alors reliés à l'atmosphère,
**caractérisé en ce que**
- le conduit d'évacuation (28) séparé du conduit-pilote (20) traverse la première soupape de passage (26) commandée pneumatiquement et est bloqué par le premier piston (44) lorsque ce dernier se trouve sur son siège (54) et est ouvert lorsque le premier piston (44) est éloigné de son siège (54), de telle sorte que l'air d'un amortisseur pneumatique (6a à 6d) peut alors être relâché dans l'atmosphère.

2. Dispositif de régulation de niveau selon la revendication 1, **caractérisé en ce que**
- la première soupape de passage (26) commandée pneumatiquement contient un espace (50, 74) dans lequel le piston (44) s'enfonce au moins en partie,
- **en ce que** le conduit d'évacuation (28) contient deux conduits partiels (28a et 28b) qui débouchent chacun par une de leurs extrémités (30, 32) dans l'espace (50, 74) et
- **en ce qu'**au moins une des embouchures (30, 32) est fermée par le premier piston (44) lorsque ce dernier se trouve sur son siège (54), les deux embouchures (30, 32) étant ouvertes lorsque le premier piston (44) est éloigné de son siège (54), de sorte qu'alors les deux conduits partiels (28a, 28b) sont reliés l'un à l'autre par l'espace (50, 74).

3. Dispositif de régulation de niveau selon la revendication 2, **caractérisé en ce qu'**au moins un des conduits partiels (28a, 28b) débouche dans un siège d'étanchéité (64) sur lequel repose le premier piston (44) et **en ce que** le premier piston (44) est maintenu sur le siège d'étanchéité (64) par le premier ressort (46).

4. Dispositif de régulation de niveau selon l'une des revendications 2 à 3, **caractérisé en ce que** l'espace (50, 74) est un espace annulaire (50) ou un alésage (74) ménagé dans le boîtier (42) de la première soupape de passage (26) commandée pneumatiquement.

5. Dispositif de régulation de niveau selon la revendication 1, **caractérisé en ce que**
- le conduit d'évacuation (28) contient deux conduits partiels (28a, 28b), une des extrémités d'un conduit partiel débouchant sur la surface d'enveloppe du premier piston (44) à distance d'une des extrémités de l'autre conduit partiel dans la direction axiale du premier piston (44) et
- **en ce qu'**entre la surface d'enveloppe du premier piston (44) et la paroi d'un boîtier (42) dans lequel le premier piston (44) est guidé axialement est disposé un joint d'étanchéité (78b) qui coopère avec le premier piston (44) de manière à bloquer la liaison des conduits partiels (28a, 28b) le long de la surface d'enveloppe du premier piston (44) lorsque ce dernier se trouve sur son siège (54) et qui libère la liaison lorsque le premier piston (44) est éloigné de son siège (54).

6. Dispositif de régulation de niveau selon la revendication 5, **caractérisé en ce que** le premier piston (44) présente une rainure dans laquelle est disposé un joint torique (78b), la rainure étant disposée entre les deux conduits partiels (28a, 28b) et étant comprimée radialement entre le premier piston (44) et la paroi du cylindre lorsque le premier piston (44) est placé sur son siège et étant située au-dessus ou en dessous des deux conduits partiels (28a, 28b) lorsque le premier piston (44) est éloigné de son siège (54).

7. Dispositif de régulation de niveau selon l'une des revendications 1 à 6, **caractérisé en ce que** le conduit d'évacuation (28) présente un étranglement (72) disposé entre les amortisseurs pneumatiques (6a à 6d) et le séchoir d'air (8).

8. Dispositif de régulation de niveau selon la revendication 7, **caractérisé en ce que** l'étranglement (72) est disposé dans le conduit d'évacuation (28) de telle sorte que l'air ne le traverse que pendant qu'un amortisseur pneumatique (6a à 6d) est vidé.
